**Europäisches Patentamt**

**European Patent Office**

**Office européen des brevets**

(19)

(11) Publication number : **0 493 339 A1**

# (12) EUROPEAN PATENT APPLICATION

(21) Application number : **91830561.6**

(22) Date of filing : **17.12.91**

(51) Int. Cl.⁵ : **G01F 23/36**

(30) Priority : **21.12.90 IT 5345090 U**

(43) Date of publication of application :
**01.07.92 Bulletin 92/27**

(84) Designated Contracting States :
**AT BE CH DE DK ES FR GB GR IT LI LU NL SE**

(71) Applicant : **SICEB S.p.A.**
**Via Rio Galletto 1**
**I-17045 Legino (Savona) (IT)**

(72) Inventor : **Bianco, Gianni**
**c/o Siceb S.p.A., Via Rio Galletto 1**
**I-17045 Legino, (Savona) (IT)**

(74) Representative : **Buzzi, Franco et al**
**c/o Jacobacci-Casetta & Perani S.p.A. Via**
**Alfieri, 17**
**I-10121 Torino (IT)**

(54) **Electrical level indicator for fuel tanks of motor vehicles and similar applications.**

(57)    Electrical level indicator for fuel tanks of motor vehicles and for similar applications in which two movable contacts (4, 5) carried by a rotatable arm (3) are both in wiping contact with a comb structure (17) comprising conductive segments (18) alternating with insulating segments (19) and terminating in a deposit of resistive material (20) to supply at the output a variable ohmic value which is inversely proportional to the level of fuel. The radially inner movable contact (5) cooperates with a terminal conductive area (11) to indicate the level of reserve.

FIG. 1

The present invention relates to electrically operated level indicators for fuel tanks of motor vehicles and similar applications.

More particularly, the invention relates to a level indicator of the rotatable rheostat type, comprising an arm adapted for angular displacement about an axis of rotation by means of a float, and an insulating plate normally of ceramic material, carrying an arcuate conductive track connected to a resistive coating deposited on the plate concentric with the said axis of rotation and with which there cooperates in wiping contact a first movable contact carried by the arm in order to provide a variable ohmic value to indicate the level, and an electrically conductive area disposed close to one end of the conductive track and with which there is adapted to cooperate a second movable contact carried by the arm in a radially inner position in relation to the first movable contact, to supply an indication of reserve level, and in which there is also provided a second arcuate track concentric with the axis of rotation of the arm and disposed in a radially inner position in relation to the said conductive track, with which the said second movable contact cooperates in a wiping contact relationship.

A level indicator of the above-defined type is known from GB-A-2 127 974. According to this known indicator, the track on which the second movable contact slides may be of insulating material and in this case it extends as far as the conductive area to indicate the reserve, or is of conductive material and in this case it ends before the aforesaid conductive area. In both cases, the track of the second movable contact has the sole function of avoiding direct contact between the latter and the ceramic material of the plate and the said second movable contact performs the sole function of supplying an indication of the reserve whenever it reaches the conductive area.

The object of the present invention is to provide an electrically operated level indicator of the type defined above but which offers greater operational reliability compared with the known indicators of the same type.

According to the invention, this purpose is achieved by reason of the fact that the second arcuate track with which the second movable contact cooperates is also a conductive track connected to the aforesaid resistive coating.

By reason of this solution, the viability of the indicator is appreciably enhanced thanks to the fact that both the movable contacts are simultaneously used to indicate the level or, in other words, thanks to the fact that the second movable contact, in addition to supplying an indication of the reserve level, cooperates throughout the entire measuring movement on the part of the rotatable arm. The redundancy of contact throughout the entire movement therefore ensures greater reliability of the indication with no need for recourse to auxiliary devices to indicate the reserve.

At the moment when the second movable contact reaches the conductive area which indicates the reserve, only the first movable contact remains engaged on the resistive track and provides a normal reading of the instrument associated with the indicator: by making the reading coincide with the zero of the instrument (zero fuel contents), the lack of redundancy of contact in this situation is prevented from constituting a limitation on the increase in reliability in that, in such a case, a possible false contact will not change the reading supplied by the instrument at such time as the ohmic value supplied by the indicator (which is inversely proportional to the level of fuel) is at its maximum.

According to a particularly advantageous embodiment of the invention, the two conductive tracks form part of one single substantially comb-like structure comprising conductive segments alternating with insulating segments and ending in a deposit of resistive material applied to the plate in a position which is radially outside the said tracks.

The said conductive and insulating segments converge radially towards the axis of rotation of the arm and the insulating segments are ideally of a constant length which is less than that of the conductive segments.

The invention will now be described in detail with reference to the appended drawings which are supplied purely by way of non-limitative example and in which:

Fig. 1 is a diagrammatic elevational view of an electrical level indicator according to the invention and

Fig. 2 shows on a larger scale the detail indicated by the arrow II in Fig. 1.

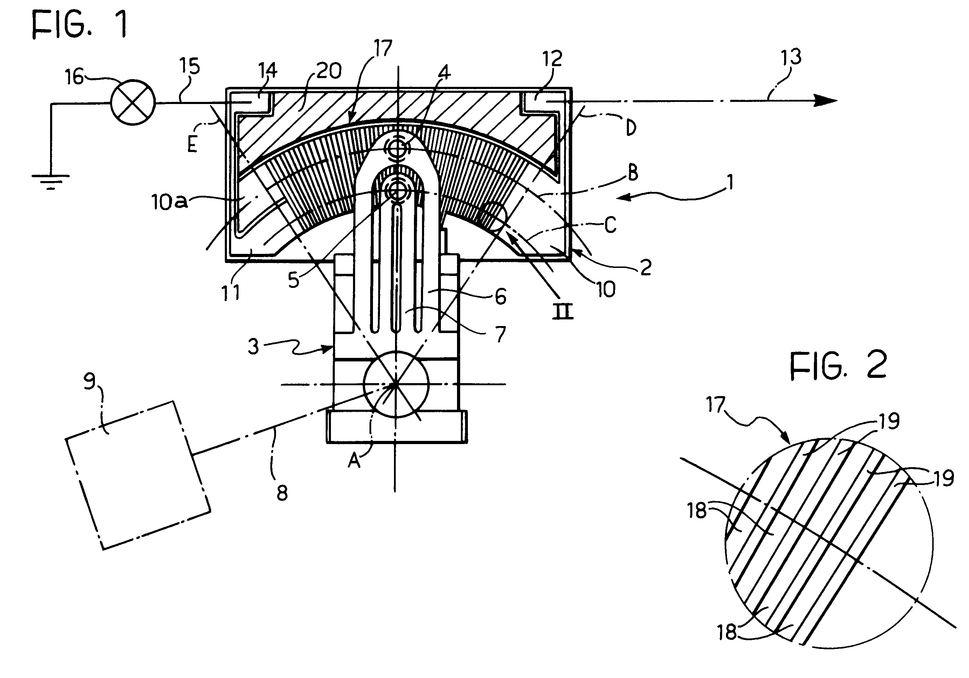

With reference to Fig. 1, reference numeral 1 generally denotes an electrical level indicator for fuel tanks of vehicles and the like, comprising a stationary plate 2 and a movable assembly 3.

The plate 2 is normally of ceramic material and is coated on the face which is visible in the drawing with thick film deposits of various materials, produced by techniques similar to those used in the manufacture of printed circuits. On the said face, to which reference will be made hereinafter, there are disposed in wiping contact a first and a second movable contact 4, 5 carried by the movable assembly 3, which consists of an arm adapted to rotate about an axis A and formed with two attached flexible plates 6,7 parallel to each other, the first of which is generally shaped like an inverted U and carries at its free end the first movable contact 4 while the second is disposed inside the first and carries the second movable contact 5. The two plates 6 and 7 are so shaped as to ensure the necessary pressure of the two movable contacts 4, 5 against the face of the plate 2.

Rotation of the movable assembly 3 about the axis A is in per se known manner controlled by a lever generally indicated by the reference numeral 8 with which there is associated a float 9 adapted to be moved by the fluctuations in the level of liquid inside the tank with which the indicator 1 is associated when in use.

Returning to the active face of the plate 2, the deposits previously mentioned comprise on the one hand a layer of electrically conductive material 10 which extends from the opposite part in a zone 10a underneath which there is disposed another layer of electrically conductive material 11. The layers 10 - 10a and 11 are both of arcuate form and concentric with the axis A, the first being connected at 12 to a conductor 13 which is in turn connected to the supply to an electrical indicator instrument while the second is connected at 14 to a conductor 15 which is in turn connected to a warning light 16. The conductive layer 11 defines an area to indicate the level of reserve inside the tank and the warning light 16 has in effect the function of supplying an indication that the said reserve level has been reached.

Interposed between the two conductive layers 10 - 10a and 11 is an arcuate track 17 which is also concentric with the axis A and which consists of a contact comb which, as indicated in greater detail in Fig. 2, consists of thin conductive segments 18 alternating with insulating segments 19 which converge radially towards the axis of rotation A of the movable assembly 3. The insulating segments 19 are of constant width which is less than that of the conductive segments 18, the width of which decreases however in the direction of the axis A.

Reference numeral 20 denotes a deposit of electrically resistive material situated outside the track 17 and in contact with the radially outer edge thereof. The materials and the techniques of deposition of the track 17 and of the resistive layer 20 are generally known per se, for example from EP-B-23949.

The radial dimension of the track 17 is such that, during the angular displacements of the movable assembly 3, both the movable contacts 4, 5 are disposed in sliding contact therewith, along the paths respectively indicated as B and C. Only in the extreme angular positions of the movable assembly 3, indicated as D and E, are the movable contacts 4, 5 in one case both disposed in contact with the conductive deposit 10 and in the other respectively in contact with the extension of the conductive deposit 10a and with the area which indicates the reserve level 11. The end position D corresponds to the maximum level of liquid in the tank to which corresponds an ohmic output value from the terminal 13 of minimal value and therefore the maximum supply current to the instrument associated with the indicator 1. In the extreme position E corresponding to the minimal level of fuel in the tank the ohmic value output supplied via the first movable contact 4 is at a maximum and the reserve indication provided by the presence of the second movable contact 5 on the conductive area 11 results in activation of the warning light 16.

In all the intermediate angular configurations of the movable assembly 3, the variable ohmic value output from the terminal 13 is supplied via both the movable contacts 4, 5: the redundancy of contact thus makes it possible to obtain a high level of operative reliability in the indicator 1.

## Claims

1. An electrical level indicator for fuel tanks of motor vehicles and similar applications, of the type comprising a rotatable rheostat (1) comprising an arm (3) adapted for angular displacement about an axis of rotation (A) via a float (9) and an insulating plate (2) normally of ceramic material, carrying an arcuate conductive track (B) connected to a resistive coating (20) deposited on the plate concentric with the said axis of rotation (A) and with which there cooperates, in wiping contact, a first movable contact (4) carried by the arm (3) in order to supply a variable ohmic value to indicate the level, and an electrically conductive area (11) disposed in the vicinity of one end of the conductive track (B) and with which there cooperates a second movable contact (5) carried by the arm (3) in a radially inner position in relation to the first movable contact (4) to supply an indication of the reserve level and in which there is also provided a second arcuate track (C) concentric with the axis of rotation (A) of the arm (3) and disposed in a radially inner position in relation to the said conductive track (B), with which the said second movable contact (5) is in wiping contact, characterised in that the second track (C) is also a conductive track connected to the aforesaid resistive layer (20).

2. An indicator according to Claim 1, characterised in that the two conductive tracks (B, C) form part of a single substantially comb-like structure (17) comprising electrically conductive segments (18) alternating with electrically insulating segments (19) and terminating at the aforesaid deposit of electrically resistive material (20) which is applied to the plate (2) in a position which is radially outside the said structure (17).

3. An indicator according to Claim 2, characterised in that the said conductive and insulating segments (18, 19) converge radially towards the axis of rotation (A) of the arm (3).

4. An indicator according to Claim 3, characterised in that the insulating segments (19) are preferably of constant width.

5. An indicator according to Claim 3 or Claim 4, characterised in that the insulating segments (19) are preferably of a width which is less than that of the conductive segments (18).

# FIG. 1

EP 0 493 339 A1

# FIG. 2

**European Patent Office**

# EUROPEAN SEARCH REPORT

Application Number

EP 91 83 0561

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 310 467 (JAEGER) | 1 | G01F23/36 |
| Y | * column 6, line 63 - column 7, line 51; figures 1,3 * | 2-5 | |
| | --- | | |
| Y | GB-A-2 083 710 (SMITHS INDUSTRIES) | 2 | |
| A | * page 1, line 50 - page 1, line 63; figures 1,2 * | 4 | |
| | --- | | |
| Y | EP-A-0 290 302 (JAEGER) | 3-5 | |
| | * column 3, line 38 - column 3, line 44; figure * | | |
| | --- | | |
| A,D | FR-A-2 533 694 (FIAT) | 1 | |
| | * figures * | | |
| | --- | | |
| A | PATENT ABSTRACTS OF JAPAN vol. 6, no. 221 (P-153)(1099) 5 November 1982 & JP-A-57 124 213 ( KOITO ) 3 August 1982 * abstract * | 1-3 | |
| | ----- | | **TECHNICAL FIELDS SEARCHED (Int. Cl.5 )** |
| | | | G01F |

The present search report has been drawn up for all claims

| Place of search | Date of completion of the search | Examiner |
|---|---|---|
| THE HAGUE | 13 APRIL 1992 | ROSE A.R.P. |